(19) Europäisches Patentamt
European Patent Office
Office européen des brevets

(11) **EP 4 629 656 A1**

(12) **EUROPEAN PATENT APPLICATION**
published in accordance with Art. 153(4) EPC

(43) Date of publication:
**08.10.2025 Bulletin 2025/41**

(21) Application number: **23895918.3**

(22) Date of filing: **12.06.2023**

(51) International Patent Classification (IPC):
**H04N 25/677** (2023.01)

(52) Cooperative Patent Classification (CPC):
**H04N 23/73; H04N 23/951; H04N 25/628;
H04N 25/677**

(86) International application number:
**PCT/CN2023/099585**

(87) International publication number:
**WO 2024/113753 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 CN 202211524256**

(71) Applicant: **Zhejiang Uniview Technologies Co.,
Ltd.
Hangzhou, Zhejiang 310051 (CN)**

(72) Inventors:
• **ZHOU, Xinhua**
  **Hangzhou, Zhejiang 310051 (CN)**
• **ZHU, Yubao**
  **Hangzhou, Zhejiang 310051 (CN)**
• **HE, Xiaohu**
  **Hangzhou, Zhejiang 310051 (CN)**

(74) Representative: **Müller-Boré & Partner
Patentanwälte PartG mbB
Friedenheimer Brücke 21
80639 München (DE)**

(54) **STRIPE NOISE IMAGE OPTIMIZATION METHOD AND APPARATUS, AND DEVICE AND MEDIUM**

(57) A stripe noise image optimization method, apparatus, device and a medium are provided. The method includes: extracting candidate stripe noises in a stripe noise image, and determining candidate stripe windows based on adjacent candidate stripe noises (S110); determining a target stripe window based on candidate center distances between the candidate stripe windows and a region-of-interest window in the stripe noise image (S210); and adjusting an acquisition parameter of an image sensor based on a target center distance between the target stripe window and the region-of-interest window, to allow the target center distance between the target stripe window and the region-of-interest window in the stripe noise image acquired according to an adjusted acquisition parameter to meet a preset distance condition (S310).

FIG. 1

EP 4 629 656 A1

**Description**

This disclosure claims priority to Chinese Patent Application No. 202211524256.3 filed with the China National Intellectual Property Administration (CNIPA) on Nov. 30, 2022, the disclosure of which is incorporated herein by reference in its entirety.

TECHNICAL FIELD

This application relates to the field of image processing technology, for example, to a stripe noise image optimization method, a stripe noise image optimization apparatus, a stripe noise image optimization electronic device and a medium.

BACKGROUND

With the development of image processing technology, people have put forward higher requirements for image presentation effects. However, images taken by surveillance cameras with complementary metal oxide semiconductor (CMOS) image sensors often have stroboscopic stripes. This type of sensor adopts a row-by-row exposure method. When the exposure time is not an integer multiple of the reciprocal of the power supply energy change cycle, the amounts of energy received by rows of pixels will be different, resulting in light and dark stripe noises in the image. In order to eliminate stripe noises, the exposure time of the image sensor is generally set to an integer multiple of the reciprocal of the power supply energy change cycle, and the acquisition frame rate of the image sensor is set to an integer multiple of the energy change cycle.

However, in engineering practice, in order to avoid motion blur, when capturing medium and high-speed moving objects such as vehicles or pedestrians, a shorter exposure time is generally used, which cannot meet the requirement that the exposure time is an integer multiple of the reciprocal of the power supply energy cycle. Furthermore, since the acquisition frame rate of the image sensor cannot accurately match the power supply frequency, the stripe noise rolls slowly in one direction. The motion stripe is generally black. Thus, when the region of interest overlaps the motion stripe, it may cause problems such as reduced brightness and blurred details in the region of interest, which seriously affects the recognition of the region of interest.

SUMMARY

A stripe noise image optimization method, a stripe noise image optimization apparatus, a stripe noise image optimization device, and a medium are provided according to the present application, which can effectively solve the problem of the influence of stroboscopic stripe noises on the image quality of the region of interest, thereby improving the imaging quality of the region of interest.

According to one aspect of the present application, a stripe noise image optimization method is provided, the method includes: extracting candidate stripe noises in a stripe noise image, and determining candidate stripe windows based on adjacent candidate stripe noises; determining a target stripe window based on candidate center distances between the candidate stripe windows and a region-of-interest window in the stripe noise image; and adjusting an acquisition parameter of an image sensor based on a target center distance between the target stripe window and the region-of-interest window, to allow the target center distance between the target stripe window and the region-of-interest window in the stripe noise image acquired according to an adjusted acquisition parameter to meet a preset distance condition.

According to another aspect of the present application, a stripe noise image optimization apparatus is provided, which includes: a candidate stripe window determination module, a target stripe window determination module and an acquisition parameter adjustment module.

The candidate stripe window determination module is configured to extract candidate stripe noises in a stripe noise image and determine candidate stripe windows based on adjacent candidate stripe noises.

The target stripe window determination module is configured to determine a target stripe window based on candidate center distances between the candidate stripe windows and a region-of-interest window in the stripe noise image.

The acquisition parameter adjustment module is configured to adjust an acquisition parameter of an image sensor based on a target center distance between the target stripe window and the region-of-interest window, to allow the target center distance between the target stripe window and the region-of-interest window in the stripe noise image acquired according to an adjusted acquisition parameter to meet a preset distance condition.

According to another aspect of the present application, a stripe noise image optimization electronic device is provided, which includes: at least one processor; and a memory connected in communication with the at least one processor.

The memory stores a computer program executable by the at least one processor, and the computer program is executed by the at least one processor, to cause the at least one processor to execute the stripe noise image optimization method described in any embodiment of the present application.

According to another aspect of the present application, a computer-readable storage medium is provided. The computer instruction, when being executed by a processor, causes the processor to implement the stripe noise image optimization method described in any embodiment of the present application.

BRIEF DESCRIPTION OF DRAWINGS

The drawings required for use in the description of the embodiments are introduced below. The drawings described below are only some embodiments of the present application. For the person of ordinary skills in the art, other drawings can also be obtained based on these drawings without making creative efforts.

FIG. 1 is a flowchart of a stripe noise image optimization method according to embodiment one of the present application;

FIG. 2 is a schematic diagram of a row average value of a difference image according to the embodiment one of the present application;

FIG. 3 is a schematic diagram of a stripe noise image according to the embodiment one of the present application;

FIG. 4 is a flowchart of a stripe noise image optimization method according to embodiment two of the present application;

FIG. 5 is a schematic structural diagram of a stripe noise image optimization apparatus according to embodiment three of the present application; and

FIG. 6 is a schematic structural diagram of a stripe noise image optimization electronic device according to an embodiment of the present application.

DETAILED DESCRIPTION

In order to make the person skilled in the art understand the present application, embodiments of the present application are described hereinafter in conjunction with the drawings in the embodiments of the present application. The described embodiments are only part of embodiments of the present application, not all of the embodiments. Based on the embodiments in the present application, all other embodiments obtained by the person of ordinary skills in the art without making creative efforts should fall into the scope of protection of the present application.

It should be noted that the terms "first", "second", "target" and the like in the description, claims and drawings of the present application are intended to distinguish between similar objects and are not necessarily used to describe a particular order or sequence. It is to be understood that the data used in this way is interchangeable where appropriate so that the embodiments of the present application described herein may also be implemented in a sequence not illustrated or described herein. Furthermore, terms such as "include", "have"; and variations thereof, are intended to cover non-exclusive inclusion, e.g., a process, method, system, product, or device including a series of steps or units is not necessarily limited to those steps or units listed, but may include other steps or units not listed or inherent to such process, method, system, product or device.

Embodiment One

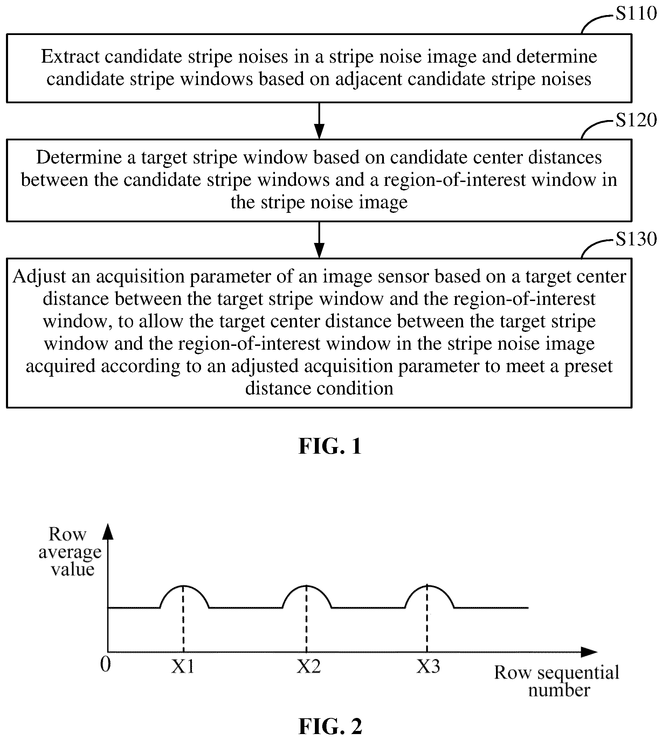

FIG. 1 is a flowchart of a stripe noise image optimization method according to embodiment one of the present application. This embodiment is applicable to the case of optimizing a stripe noise image. The method can be executed by a stripe noise image optimization apparatus. The stripe noise image optimization apparatus can be implemented in the form of hardware and/or software. The stripe noise image optimization apparatus can be configured in an electronic device with data processing capabilities. As shown in FIG. 1, the method includes: S110 to S130.

S110 may include extracting candidate stripe noises in a stripe noise image, and determining candidate stripe windows based on adjacent candidate stripe noises.

Specifically, a stripe noise image may refer to an image containing stripe noises. A candidate stripe noise may refer to any stripe noise in a stripe noise image. Generally, candidate stripe noise is distributed in a stripe shape in units of rows, and may cover one or more rows. A candidate stripe window may refer to a stripe window composed by two adjacent candidate stripe noises (or two pieces of candidate stripe noise). Exemplarily, assuming that the number of candidate stripe noises is n, the number of candidate stripe windows can be determined to be n-1. It should be noted that in this embodiment, the number of candidate stripe noises and the number of candidate stripe windows can be determined based on the practical stripe noise image.

In this embodiment, each stripe noise in the stripe noise image is first extracted as a candidate stripe noise, and a candidate stripe window is determined based on two adjacent candidate stripe noises. It should be noted that the method for extracting stripe noises in the stripe noise image in this embodiment can be set according to practical requirements. Exemplarily, the candidate stripe noises in the stripe noise image can be extracted based on a motion detection algorithm. Exemplarily, if the stripe noises are moving, a background image of the current scene can be generated by a conventional motion detection algorithm (such as a background modeling method). Then, the background image is subtracted from the current stripe noise image to obtain a difference image, and the absolute value of the difference image is calculated to obtain the significant areas of the stripe noises in the current stripe noise image. Then, the significant areas are divided into blocks along the direction of motion of the stripe noises, and the row coordinates corresponding to the maximum absolute values of the difference image in the block images are calculated, the row coordinates are just the center positions of the stripe noises. According to the center positions of the stripe noises, the candidate stripe noises in the stripe noise image can be determined.

In this embodiment, optionally, extracting candidate stripe noises in a stripe noise image includes: acquiring images using alternately a first exposure time and a second exposure time through the image sensor, where the first exposure time is determined according to a power frequency, and the second exposure time is determined according to an image shooting scene; according to a first exposure image, performing brightness alignment on an adjacently acquired second exposure image, where the first exposure image is an image acquired using the first exposure time, and the second exposure image is an image acquired using the second exposure time; and determining positions of the candidate stripe noises according to a difference image between the first exposure image and a second exposure image obtained after the brightness alignment.

Specifically, the first exposure time may refer to a long exposure time, for example, which may be determined according to the power frequency. Exemplarily, the first exposure time may be set to an integer multiple of the reciprocal of the power energy cycle, so as to ensure that the brightness of the image acquired using the first exposure time (i.e., the first exposure image) is appropriate overall. For example, if the power energy cycle is 100 HZ, the first exposure time may be set to N/100 seconds; if the power frequency is 120 HZ, the first exposure time may be set to N/120 seconds, where N is a positive integer greater than or equal to 1. It should be noted that when the first exposure time is an integer multiple of the reciprocal of the power energy cycle, there is no stripe noise in the first exposure image. The second exposure time may refer to a short exposure time, for example, the second exposure time can be determined according to the image shooting scene, and can generally be automatically adjusted according to the automatic exposure algorithm. Exemplarily, when the image shooting scene is a vehicle, considering suppressing the vehicle lights or capturing a moving vehicle, the exposure time of the image captured using the second exposure time (i.e., the second exposure image) is generally less than the integer multiple of the reciprocal of the power energy cycle, so there are generally stripe noises in the second exposure image.

In this embodiment, first, the image sensor is set to capture images using alternately the first exposure time and the second exposure time, so that the image sensor alternately outputs the first exposure image and the second exposure image. The first exposure time is set to an integer multiple of the reciprocal of the power energy cycle to ensure that there is no stripe noise in the first exposure image; and the second exposure time is determined according to the practical image shooting scene. Since the first exposure images and the second exposure images are output alternately, the brightness difference between adjacent images is large, and in this case, it is necessary to achieve brightness alignment of the first exposure image and the second exposure image according to the first exposure image. Since the first exposure image and the second exposure image are bare images directly output by the image sensor, they have good linearity (i.e., the brightness value is directly proportional to the exposure time), so for the image obtained after the brightness alignment, the brightness of the second exposure image is basically consistent with the brightness of the first exposure image except for the stripe noises.

For example, the brightness of the second exposure image acquired adjacent to the first exposure image can be aligned using the following formula:

$$I'_{short} = \left(I_{short} \times T_{long} \times G_{long}\right)/(T_{short} \times G_{short}) .$$

Where, $I_{short}$ represents the original second exposure image, $I'_{short}$ represents the second exposure image obtained after the brightness alignment, $T_{long}$ and $T_{short}$ represent the first exposure time and the second exposure time respectively, and $G_{long}$ and $G_{short}$ represent the first exposure image gain and the second exposure image gain respectively.

Since there is no stripe noise in the first exposure image, but there are dark stripe noises in the second exposure image, in the absolute value image corresponding to the difference image between the first exposure image and the second exposure image obtained after brightness alignment, the value of the pixel at the stripe noise position is greater than zero, and the value of the pixel at the non-stripe noise position is close to zero. Therefore, the positions of the candidate stripe noises can be determined according to the absolute value image corresponding to the difference image between the first exposure image and the second exposure image obtained after brightness alignment. By calculating the difference image and finding the absolute value of the difference image, most of the background information in the image can be removed while the stripe noise characteristics in the image are retained. Exemplarily, first, the difference image is determined according to the difference between the first exposure image and the second exposure image obtained after brightness alignment, and the absolute value of the difference image is found, and then the row average value is calculated for each row in the absolute value image corresponding to the difference image. As shown in FIG. 2, FIG. 2 is a schematic diagram of a row average value of a difference image according to the embodiment one of the present application. The number of row sequential numbers is consistent with the height of the image in units of pixels. Furthermore, there is no stripe noise in the rows where the row average values corresponding to the straight line area are located, and there are stripe noises in the rows where the row average values corresponding to the non-straight line areas are located, so there are three stripe noises in FIG. 2. X1, X2 and X3 respectively represent the row sequential numbers corresponding to the maximum row average values in the rows where different stripe noises are located in the absolute value image corresponding to the difference image. For each stripe noise in FIG. 2, the stripe noises at the positions of X1, X2 and X3 are the most obvious. In order to determine the positions of the candidate stripe noises, first, the row average values of the difference image can be divided into multiple parts by a thresholding method, each part contains a complete stripe noise, and then the local maximum value is searched for each part. The row sequential numbers (such as X1, X2 and X3 in FIG. 2) corresponding to the maximum values are the row positions of the candidate stripe noises. Specifically, the threshold in the above thresholding method can be obtained by averaging the row average values of the absolute value image corresponding to the difference image.

In this solution, through such a setting, candidate stripe noises in the stripe noise image can be quickly and accurately extracted, so that candidate stripe windows can be determined based on the candidate stripe noises subsequently.

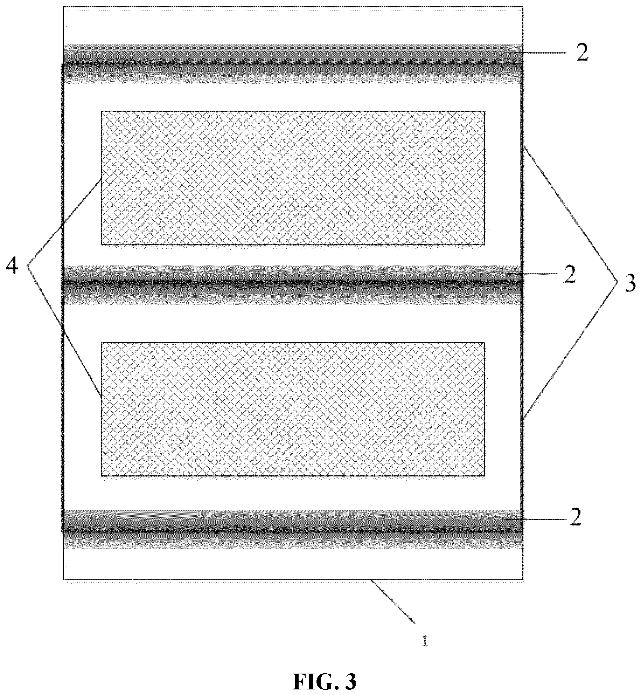

After the positions of the candidate stripe noises are determined, candidate stripe windows can be determined based on adjacent candidate stripe noises. FIG. 3 is a schematic diagram of a stripe noise image according to the embodiment one of the present application. As shown in FIG. 3, 1 represents a stripe noise image, 2 represents a candidate stripe noise (three), 3 represents a candidate stripe window (two), and 4 represents a region-of-interest window (two). Every two adjacent candidate stripe noises can compose one candidate stripe window. The region-of-interest window may refer to an image window composed by a region of interest. The region of interest is generally a rectangular area or a trapezoidal area with parallel upper and lower bottom edges. The circumscribed rectangle of the region of interest can be set in advance or detected by an intelligent algorithm as the region-of-interest window.

S120 may include determining a target stripe window based on candidate center distances between the candidate stripe windows and a region-of-interest window in the stripe noise image.

The candidate center distance may refer to a row spacing between the center row of the candidate stripe window and the center row of the region-of-interest window. The target stripe window may refer to the stripe window selected from the candidate stripe windows according to the candidate center distances.

In this embodiment, after the candidate stripe windows are determined, the center row of each candidate stripe window and the center row of each region-of-interest window may be determined separately, and the row spacing between the center row of each candidate stripe window and the center row of each region-of-interest window may be calculated separately as the candidate center distance, and then the target stripe window is determined according to multiple candidate center distances. Exemplarily, a preset window number may be determined according to practical requirements, and minimum candidate center distances of the preset window number are selected from multiple candidate center distances, and the candidate stripe windows corresponding to the selected candidate center distances may be used as the target stripe windows.

In this embodiment, optionally, the determining a target stripe window based on candidate center distances between the candidate stripe windows and a region-of-interest window in the stripe noise image includes: determining a candidate stripe window corresponding to a minimum candidate center distance among the candidate center distances as a target stripe window. It should be noted that the smaller the candidate center distance is, the greater the possibility that the candidate stripe noise corresponding to the candidate center distance overlaps the region-of-interest window. One of the advantages of using the candidate center distance between the candidate stripe window and a region-of-interest window in the stripe noise image as a determination condition is that the center distance can be regarded as taking into account both the height (number of pixel rows) of the stripe noise area and the height (number of pixel rows) of the region-of-interest window, which can simplify the calculation process of determining whether the stripe noise area and the region-of-interest window overlap.

S130 may include adjusting an acquisition parameter of an image sensor based on a target center distance between the target stripe window and the region-of-interest window, to allow the target center distance between the target stripe window and the region-of-interest window in the stripe noise image acquired according to an adjusted acquisition parameter to meet a preset distance condition.

The target center distance may refer to the row spacing between the center row of the target stripe window and the center row of the region-of-interest window. The preset distance condition may refer to a target center distance condition set in advance, which can be used as a basis for determining whether a stripe noise exists in the corresponding region-of-interest window, and may also be used as an end condition for adjusting the acquisition parameter of the image sensor. Exemplarily, if the target center distance meets the preset distance condition, it indicates that there is no stripe noise in the corresponding region-of-interest window, and the adjustment on the acquisition parameter of the image sensor can be stopped at this time; and if the target center distance does not meet the preset distance condition, it indicates that there is a stripe noise in the corresponding region-of-interest window, and the acquisition parameter of the image sensor is required to be adjusted until the target center distance meets the preset distance condition.

Exemplarily, the preset distance condition may be set as the target center distance being greater than the preset distance threshold. The preset distance threshold may refer to a reference value of the target center distance set in advance, which can be used to control the amplitude of unidirectional oscillation and the duration of unidirectional movement of the target stripe window. In this embodiment, the preset distance threshold can be set according to actual needs. Optionally, the preset distance threshold is determined according to the height of the target stripe window and the height of the region-of-interest window. Exemplarily, assuming that the height of the target stripe window is $h_0$ and the height of the region-of-interest window is $h_1$, where the height is in units of pixels, and the preset distance threshold d can be expressed as

$$0 \leq d \leq \frac{h_0 - h_1}{2}.$$

In this embodiment, optionally, the acquisition parameter includes a blanking row number parameter, and the blanking row number parameter includes a vertical blanking row number parameter and/or a horizontal blanking row number parameter. It should be noted that when external light irradiates a pixel array of the image sensor, a photoelectric effect occurs, and corresponding charges are generated in the pixel units of the image sensor. In the scanning process of converting the optical signal into an electrical signal, the scanning always starts from an upper left corner of the image and moves forward horizontally, and the scanning point also moves downward at a slower rate. When the scanning point reaches a right edge of a first row of the image, the scanning point will quickly return to left and restart a second row scanning below the starting point of the first row. The time interval of the return process between rows is called horizontal blanking. A complete image scanning signal is a frame, which is composed of row signal sequences separated by horizontal blanking intervals. After the scanning point finishes scanning a frame, it is required to return from the lower right corner of the image to the upper left corner of the image to start scanning a new frame, and this time interval is called vertical blanking.

In this embodiment, optionally, the adjusting an acquisition parameter of an image sensor based on a target center distance between the target stripe window and the region-of-interest window includes: if the target center distance is less than or equal to the preset distance threshold, adjusting the acquisition parameter of the image sensor according to a preset acquisition parameter adjustment strategy; otherwise, continuing to acquire an image using the current acquisition parameter.

In this embodiment, it is possible to first determine whether the target center distance meets the preset distance condition, and determine, based on the determination result, whether the acquisition parameter of the image sensor needs to be adjusted. Exemplarily, if the target center distance is less than or equal to the preset distance threshold, that is, the target center distance does not meet the preset distance condition, in this case, the acquisition parameter of the image sensor can be adjusted according to a preset acquisition parameter adjustment strategy; and if the target center distance is greater than the preset distance threshold, that is, the target center distance meets the preset distance condition, in this case, the image is continuously acquired using the current acquisition parameter.

In this embodiment, through such a setting, it is possible to quickly and accurately determine whether the acquisition parameter of the image sensor is required to be adjusted according to the determination result of whether the target center distance meets the preset distance condition, and adjust the acquisition parameter of the image sensor according to the preset acquisition parameter adjustment strategy when adjustment is required, until the target center distance in the stripe noise image acquired according to the adjusted acquisition parameter meets the preset distance condition, thereby ensuring that the region-of-interest window in the stripe noise image is not affected by the stripe noise, so as to improve the imaging quality of the region-of-interest window.

In this embodiment, optionally, the adjusting the acquisition parameter of the image sensor according to a preset acquisition parameter adjustment strategy includes: setting the acquisition parameter to a first blanking row number parameter; if a target center distance between a target stripe window and a region-of-interest window in a first subsequent image acquired using the first blanking row number parameter is greater than the preset distance threshold, switching the first blanking row number parameter to a second blanking row number parameter; and if a target center distance between a target stripe window and a region-of-interest window in a second subsequent image acquired using the second blanking row number parameter is greater than the preset distance threshold, switching the second blanking row number parameter back to the first blanking row number parameter. The first blanking row number parameter and the second blanking row number parameter are determined according to a blanking row number threshold, the blanking row number threshold represents a blanking row number parameter critical value for switching a stripe motion direction, and a stripe motion direction in an image acquired using the first blanking row number parameter is different from a stripe motion direction in an image acquired using the second blanking row number parameter.

The first blanking row number parameter and the second blanking row number parameter may refer to two different blanking row number parameters, respectively, and the first blanking row number parameter and the second blanking row number parameter are both positive integers. Specifically, the first blanking row number parameter and the second blanking row number parameter are determined according to a blanking row number threshold, the blanking row number threshold represents a blanking row number parameter critical value for switching a stripe motion direction, and a stripe motion direction in an image acquired using the first blanking row number parameter is different from a stripe motion direction in an image acquired using the second blanking row number parameter. Since the frequency of the alternating current is relatively fixed, generally 50HZ or 60HZ, the blanking row number threshold is fixed and unchanged, and can be calibrated when the camera leaves the factory. The first subsequent image and the second subsequent image can refer to images acquired using the first blanking row number parameter and the second blanking row number parameter, respectively. It should be noted that the first blanking row number parameter and the second blanking row number parameter can be vertical blanking row number parameters or horizontal blanking row number parameters.

Exemplarily, when a blanking row number parameter greater than or equal to the blanking row number threshold is used to acquire an image, the stripe motion direction in the image is to move upwards; and when a blanking row number parameter less than the blanking row number threshold is used to acquire an image, the stripe motion direction in the image is to move downwards. Correspondingly, the preset acquisition parameter adjustment strategy may include two adjustment strategies, namely, a first acquisition parameter adjustment strategy and a second acquisition parameter adjustment strategy. In the first acquisition parameter adjustment strategy, the first blanking row number parameter is greater than or equal to the blanking row number threshold, and the second blanking row number parameter is less than the blanking row number threshold, that is, the target stripe window in the image first moves to the top of the image and then to the bottom of the image. In the second acquisition parameter adjustment strategy, the first blanking row number parameter is less than the blanking row number threshold, and the second blanking row number parameter is greater than or equal to the blanking row number threshold, that is, the target stripe window in the image first moves to the bottom of the image and then to the top of the image.

In this embodiment, the blanking row number parameter can be dynamically adjusted according to the target center distance between the target stripe window and the region-of-interest window, so that the target stripe window moves in a pendulum-like manner between the upper and lower edges of the region-of-interest window, thereby eliminating the influence of stripe noise on the image quality of the region-of-interest window. Exemplarily, taking the vertical blanking row number parameter as an example, the adjustment process of the acquisition parameter of the image sensor is as follows: first, the acquisition parameter is set to the first blanking row number parameter $VMaxX$. If $VMaxX \geq VMax_0$, the stripes in the image will move upwards, where, $VMax_0$ represents the blanking row number threshold. A new image (i.e., the first subsequent image) is continued to be acquired, positions of stripe noises are detected and a target center distance between a target stripe window and a region-of-interest window is determined. If the target center distance between the target stripe window and the region-of-interest window in the first subsequent image acquired using the first blanking row number parameter is greater than the preset distance threshold, it is necessary to switch the first blanking row number parameter to the second blanking row number parameter $VMaxY(VMaxY < VMax_0)$ to allow the stripes in the image to move downwards; otherwise, it may continue to acquire the first subsequent image and determine the target center distance between the target stripe window and the region-of-interest window. If the target center distance between the target stripe window and the region-of-interest window in the second subsequent image acquired using the second blanking row number parameter $VMaxY$ is greater than the preset distance threshold, it is necessary to switch the second blanking row number parameter $VMaxY$ back to the first blanking row number parameter $VMaxX$ so that the stripes in the image move upwards. This is repeated so that the target stripe window moves in a pendulum-like manner between the upper and lower edges of the region-of-interest window to eliminate the influence of stripe noises on the image quality of the region-of-interest window, thereby improving the imaging quality of the region-of-interest window.

In this embodiment, through such a setting, the blanking row number parameter of the image sensor can be dynamically adjusted according to the target center distance between the target stripe window and the region-of-interest window to achieve the purpose of controlling the motion direction of the stripe noises, so that the target stripe window moves in a pendulum-like manner along the region-of-interest window, thereby eliminating the influence of stripe noises on the image quality of the region-of-interest window, so as to improve the imaging quality of the region-of-interest window.

In the technical solution of the embodiment of the present application, candidate stripe noises in a stripe noise image are extracted, and candidate stripe windows are determined based on adjacent candidate stripe noises; a target stripe window is determined based on candidate center distances between the candidate stripe windows and a region-of-interest window in the stripe noise image; and an acquisition parameter of an image sensor is adjusted based on a target center distance between the target stripe window and the region-of-interest window, to allow the target center distance between the target stripe window and the region-of-interest window in the stripe noise image acquired according to an adjusted acquisition parameter to meet a preset distance condition. This technical solution can effectively solve the problem of influence of stroboscopic stripe noises on the image quality of the region of interest, thereby improving the imaging quality of the region of interest.

Embodiment Two

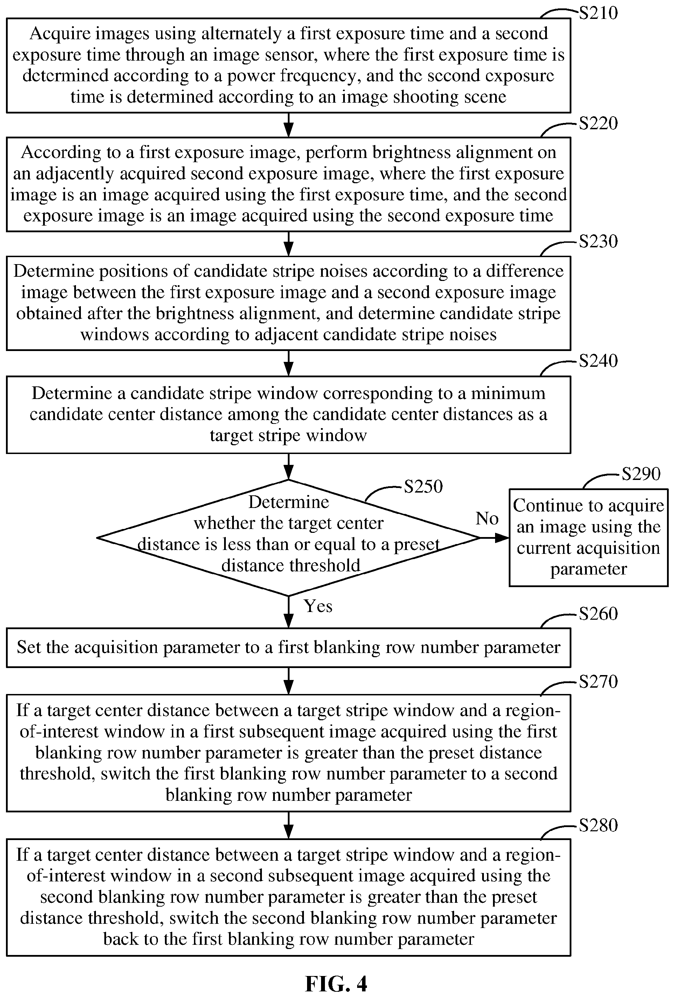

FIG. 4 is a flowchart of a stripe noise image optimization method according to embodiment two of the present application. In this embodiment, the solution is optimized based on the above embodiment. As shown in FIG. 4, the method of this embodiment includes the following steps: S210 to S290.

In S210, images are acquired using alternately a first exposure time and a second exposure time through an image sensor, where the first exposure time is determined according to a power frequency, and the second exposure time is determined according to an image shooting scene.

In S220, according to a first exposure image, brightness alignment is performed on an adjacently acquired second exposure image, where the first exposure image is an image acquired using the first exposure time, and the second exposure image is an image acquired using the second exposure time.

In S230, positions of candidate stripe noises are determined according to a difference image between the first exposure image and a second exposure image obtained after the brightness alignment, and candidate stripe windows are determined according to adjacent candidate stripe noises.

In S240, a candidate stripe window corresponding to a minimum candidate center distance among the candidate center distances is determined as a target stripe window.

In S250, whether the target center distance is less than or equal to a preset distance threshold is determined, if yes, perform S260 to S280, if no, perform S290.

In S260, the acquisition parameter is set to a first blanking row number parameter.

In S270, if a target center distance between a target stripe window and a region-of-interest window in a first subsequent image acquired using the first blanking row number parameter is greater than the preset distance threshold, the first blanking row number parameter is switched to a second blanking row number parameter.

In S280, if a target center distance between a target stripe window and a region-of-interest window in a second subsequent image acquired using the second blanking row number parameter is greater than the preset distance threshold, the second blanking row number parameter is switched back to the first blanking row number parameter.

In S290, an image is continued to be acquired using the current acquisition parameter.

In the technical solution of the embodiment of the present application, the problem of the influence of stroboscopic stripe noises on the image quality of the region of interest can be effectively solved, thereby improving the imaging quality of the region of interest.

Embodiment Three

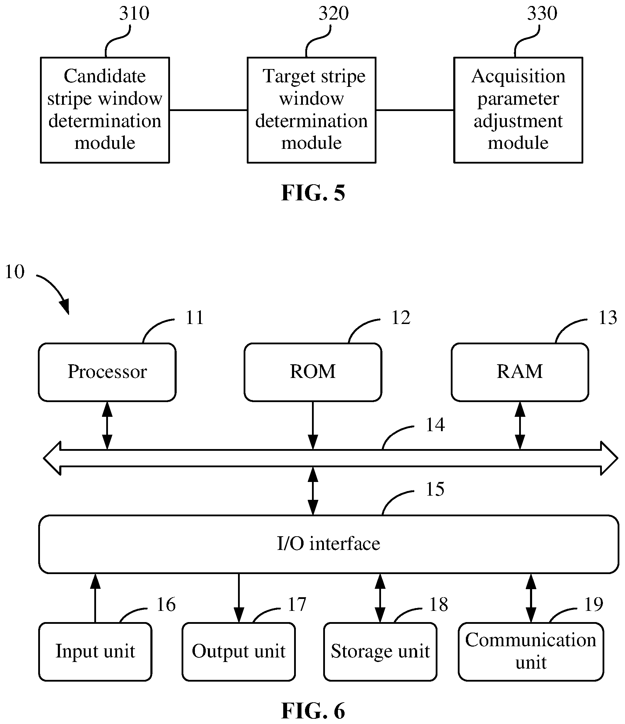

FIG. 5 is a schematic structural diagram of a stripe noise image optimization apparatus according to embodiment three of the present application. The apparatus can execute the stripe noise image optimization method according to any embodiment of the present application, and has corresponding functional modules for executing the method and can achieve corresponding beneficial effects. As shown in FIG. 5, the apparatus includes: a candidate stripe window determination module 310, a target stripe window determination module 320, and an acquisition parameter adjustment module 330.

The candidate stripe window determination module 310 is configured to extract candidate stripe noises in a stripe noise image and determine candidate stripe windows based on adjacent candidate stripe noises.

The target stripe window determination module 320 is configured to determine a target stripe window based on candidate center distances between the candidate stripe windows and a region-of-interest window in the stripe noise image.

The acquisition parameter adjustment module 330 is configured to adjust an acquisition parameter of an image sensor based on a target center distance between the target stripe window and the region-of-interest window, to allow the target center distance between the target stripe window and the region-of-interest window in the stripe noise image acquired according to an adjusted acquisition parameter to meet a preset distance condition.

Optionally, the acquisition parameter adjustment module 330 includes: an acquisition parameter adjustment unit and an image acquisition unit.

The acquisition parameter adjustment unit is configured to adjust the acquisition parameter of the image sensor according to a preset acquisition parameter adjustment strategy in response to the target center distance being less than or equal to a preset distance threshold.

The image acquisition unit is configured to continue to acquire an image using the current acquisition parameter in response to the target center distance being greater than the preset distance threshold.

Optionally, the acquisition parameter includes a blanking row number parameter, and the blanking row number parameter includes a vertical blanking row number parameter and/or a horizontal blanking row number parameter.

Optionally, the acquisition parameter adjustment unit is configured to adjust the acquisition parameter of the image sensor according to a preset acquisition parameter adjustment strategy in the following manner: setting the acquisition parameter to a first blanking row number parameter; if a target center distance between a target stripe window and a region-of-interest window in a first subsequent image acquired using the first blanking row number parameter is greater than the preset distance threshold, switching the first blanking row number parameter to a second blanking row number parameter; and if a target center distance between a target stripe window and a region-of-interest window in a second subsequent image acquired using the second blanking row number parameter is greater than the preset distance threshold, switching the second blanking row number parameter back to the first blanking row number parameter.

The first blanking row number parameter and the second blanking row number parameter are determined according to a blanking row number threshold, the blanking row number threshold represents a blanking row number parameter critical value for switching a stripe motion direction, and a stripe motion direction in an image acquired using the first blanking row number parameter is different from a stripe motion direction in an image acquired using the second blanking row number parameter.

Optionally, the preset distance threshold is determined according to a height of the target stripe window and a height of the region-of-interest window.

Optionally, the candidate stripe window determination module 310 is configured to extract candidate stripe noises in the stripe noise image in the following manner: acquiring images using alternately a first exposure time and a second exposure time through the image sensor, where the first exposure time is determined according to a power frequency, and the second exposure time is determined according to an image shooting scene; according to a first exposure image, performing brightness alignment on an adjacently acquired second exposure image, where the first exposure image is an image acquired using the first exposure time, and the second exposure image is an image acquired using the second exposure time; and determining positions of candidate stripe noises according to a difference image between the first exposure image and a second exposure image obtained after the brightness alignment.

Optionally, the target stripe window determination module 320 is configured to determine a target stripe window based on candidate center distances between the candidate stripe windows and a region-of-interest window in the stripe noise image in the following manner: determining a candidate stripe window corresponding to the minimum candidate center distance among the candidate center distances as a target stripe window.

The stripe noise image optimization apparatus provided in the embodiment of the present application can execute the stripe noise image optimization method provided in any embodiment of the present application, and has the corresponding functional modules for executing the method and can achieve corresponding beneficial effects.

Embodiment Four

FIG. 6 shows a schematic structural diagram of an electronic device 10 that can be used to implement an embodiment of the present application. The electronic device 10 may represent various forms of digital computers, such as laptops, desktops, workstations, personal digital assistants, servers, blade servers, mainframes, and other suitable computers. Electronic device may further represent various forms of mobile devices, such as personal digital processing, cellular phones, smart phones, wearable devices (e.g., helmets, glasses, watches, etc.), and other similar computing devices. The components shown herein, their connections and relationships, and their functions, are used as examples only.

As shown in FIG. 6, the electronic device 10 includes at least one processor 11, and a memory communicatively connected with the at least one processor 11, such as a read-only memory (ROM) 12, a random access memory (RAM) 13, etc., where the memory stores a computer program executable by at least one processor, and the processor 11 can perform various appropriate actions and processes according to a computer program stored in the ROM 12 or a computer program loaded from a storage unit 18 into the RAM 13. In the RAM 13, various programs and data necessary for the operation of the electronic device 10 may further be stored. The processor 11, ROM 12, and RAM 13 are connected to each other through a bus 14. An input/output (I/O) interface 15 is also connected to the bus 14.

Multiple components in the electronic device 10 are connected to the I/O interface 15, include: an input unit 16, such as a keyboard, a mouse, etc.; an output unit 17, such as various types of displays, speakers, etc.; a storage unit 18, such as a magnetic disk, an optical disk etc.; and a communication unit 19, such as a network card, a modem, a wireless communication transceiver, and the like. The communication unit 19 allows the electronic device 10 to exchange information/data with other devices through a computer network such as the Internet and/or various telecommunication networks.

The processor 11 may be various general and/or special purpose processing components having processing and computing capabilities. Some examples of the processor 11 may include a central processing unit (CPU), a graphic processing unit (GPU), various dedicated artificial intelligence (AI) computing chips, various processors that run machine learning model algorithms, digital signal processing processors (DSP), and any suitable processor, controller, microcontroller, etc. The processor 11 performs the various methods and processes described above, such as the stripe noise image optimization method.

In some embodiments, the stripe noise image optimization method can be implemented as a computer program, which is tangibly contained in a computer-readable storage medium, for example, a storage unit 18. In some embodiments, part or all of the computer program may be loaded and/or installed on the electronic device 10 via the ROM 12 and/or the communication unit 19. When the computer program is loaded into the RAM 13 and performed by the processor 11, one or more steps of the stripe noise image optimization method described above can be performed. Optionally, in other embodiments, the processor 11 may be configured in other appropriate ways (for example, by means of firmware) to perform the stripe noise image optimization method.

Various implementations of the system and technique described above herein can be implemented in a digital electronic circuit system, an integrated circuit system, a field programmable gate array (FPGA), an application specific integrated circuit (ASIC), application specific standard parts (ASSPs), a system on chip (SOC), a complex programmable logic device (CPLD), a computer hardware, firmware, software, and/or combinations thereof. These various embodiments may include being implemented in one or more computer programs which can be performed and/or interpreted on a programmable system including at least one programmable processor, the programmable processor can be a special-purpose or general-purpose programmable processor, can receive data and instruction from storage system, at least one input device, and at least one output device, and transmit data and instruction to the storage system, the at least one input device, and the at least one output device.

The one or more computer programs for implementing the method of the present application may be written in one programming language or any combination of more programming languages. These computer programs can be provided to a processor of a general-purpose computer, a special-purpose computer or other programmable data processing apparatus, so that the computer programs, when being performed by the processor, causes the functions/operations specified in the flowchart and/or block diagram to be implemented. The computer programs may be performed entirely on the machine, partly on the machine, partly on the machine and partly on a remote machine as a stand-alone software package, or entirely on a remote machine or remote server.

In the context of the present application, a computer readable storage medium may be a tangible medium that may contain or store a computer program for use by an instruction execution system, apparatus or device or use in conjunction with an instruction execution system, apparatus or device. A computer readable storage medium may include an electronic, magnetic, optical, electromagnetic, infrared, or semiconductor system, apparatus, or device, or any suitable combination of the foregoing. Optionally, a computer readable storage medium may be a machine readable signal medium. More specific examples of machine-readable storage media may include one or more wire-based electrical connected or portable computer discs, hard drives, RAM, ROM, erasable programmable read-only memory (EPROM) or flash memory, optical fiber, compact disk read-only memory (CD-ROM), optical storage, magnetic storage, or suitable combinations of the foregoing.

In order to provide interaction with the user, the systems and techniques described herein can be implemented on an electronic device having a display device (e.g., a cathode ray tube (CRT) or liquid crystal display (LCD) or a monitor) configured to display information to the user; and a keyboard and a pointing device (e.g., a mouse or a trackball) through which the user can provide input to the electronic device. Other kinds of devices can also be configured to provide interaction with the user; for example, the feedback provided to the user can be any form of sensory feedback (e.g., visual feedback, auditory feedback, or tactile feedback); and can be in any form (including acoustic input, speech input or, tactile input) to receive input from the user.

The systems and techniques described herein can be implemented in a computing system that includes back-end components (e.g., as a data server), or a computing system that includes middleware components (e.g., an application server), or a computing system that includes front-end components (e.g., a user computer having a graphical user interface or web browser through which a user can interact with embodiments of the system and technique described herein), or be implemented in a computing system including any combination of such backend components, middleware components, or front-end components. The components of the system can be interconnected by any form or medium of digital data communication, (e.g., a communication network). Examples of communication network include: local area networks (LANs), wide area network (WAN), blockchain network, and the Internet.

A computing system can include a client and a server. The client and the server are generally remote from each other and typically interact through a communication network. The relationship of the client and the server arises by computer programs running on the respective computers and having a client-server relationship to each other. The server can be a cloud server, also known as a cloud computing server or a cloud host, and is a host product in the cloud computing service system to overcome the drawbacks of difficult management and weak business expansion in traditional physical hosts and virtual private servers VPSs.

Steps may be reordered, added or deleted using the various forms of flow shown above. For example, steps described in the present application may be performed in parallel, sequentially, or in a different order, as long as the desired result of the technical solution of the present application can be achieved.

**Claims**

1. A stripe noise image optimization method, comprising:

   extracting candidate stripe noises in a stripe noise image, and determining candidate stripe windows based on adjacent candidate stripe noises;
   determining a target stripe window based on candidate center distances between the candidate stripe windows and a region-of-interest window in the stripe noise image; and
   adjusting an acquisition parameter of an image sensor based on a target center distance between the target stripe window and the region-of-interest window, to allow the target center distance between the target stripe window and the region-of-interest window in the stripe noise image acquired according to an adjusted acquisition parameter to meet a preset distance condition.

2. The stripe noise image optimization method according to claim 1, wherein the adjusting an acquisition parameter of an image sensor based on a target center distance between the target stripe window and the region-of-interest window comprises:

   in response to the target center distance being less than or equal to a preset distance threshold, adjusting the acquisition parameter of the image sensor according to a preset acquisition parameter adjustment strategy; and
   in response to the target center distance being greater than the preset distance threshold, continuing to acquire an image using the current acquisition parameter.

3. The stripe noise image optimization method according to claim 2, wherein the acquisition parameter comprises a blanking row number parameter, and the blanking row number parameter comprises at least one of a vertical blanking row number parameter and a horizontal blanking row number parameter.

4. The stripe noise image optimization method according to claim 3, wherein the adjusting the acquisition parameter of the image sensor according to a preset acquisition parameter adjustment strategy comprises:

   setting the acquisition parameter to a first blanking row number parameter;
   in response to a target center distance between a target stripe window and a region-of-interest window in a first subsequent image acquired using the first blanking row number parameter being greater than the preset distance threshold, switching the first blanking row number parameter to a second blanking row number parameter; and
   in response to a target center distance between a target stripe window and a region-of-interest window in a second subsequent image acquired using the second blanking row number parameter being greater than the preset distance threshold, switching the second blanking row number parameter back to the first blanking row number parameter,
   wherein the first blanking row number parameter and the second blanking row number parameter are determined according to a blanking row number threshold, the blanking row number threshold represents a blanking row number parameter critical value for switching a stripe motion direction, and a stripe motion direction in an image acquired using the first blanking row number parameter is different from a stripe motion direction in an image acquired using the second blanking row number parameter.

5. The stripe noise image optimization method according to any one of claims 2 to 4, wherein the preset distance threshold is determined according to a height of the target stripe window and a height of the region-of-interest window.

6. The stripe noise image optimization method according to claim 1, wherein the extracting candidate stripe noises in a stripe noise image comprises:

   acquiring images using alternately a first exposure time and a second exposure time through the image sensor, wherein the first exposure time is determined according to a power frequency, and the second exposure time is determined according to an image shooting scene;

according to a first exposure image, performing brightness alignment on an adjacently acquired second exposure image, wherein the first exposure image is an image acquired using the first exposure time, and the second exposure image is an image acquired using the second exposure time; and

determining positions of candidate stripe noises according to a difference image between the first exposure image and a second exposure image obtained after the brightness alignment.

7. The stripe noise image optimization method according to claim 1, wherein the determining a target stripe window based on candidate center distances between the candidate stripe windows and a region-of-interest window in the stripe noise image comprises:

determining a candidate stripe window corresponding to a minimum candidate center distance among the candidate center distances as a target stripe window.

8. A stripe noise image optimization apparatus, comprising:

a candidate stripe window determination module, configured to extract candidate stripe noises in a stripe noise image and determine candidate stripe windows based on adjacent candidate stripe noises;

a target stripe window determination module, configured to determine a target stripe window based on candidate center distances between the candidate stripe windows and a region-of-interest window in the stripe noise image; and

an acquisition parameter adjustment module, configured to adjust an acquisition parameter of an image sensor based on a target center distance between the target stripe window and the region-of-interest window, to allow the target center distance between the target stripe window and the region-of-interest window in the stripe noise image acquired according to an adjusted acquisition parameter to meet a preset distance condition.

9. A stripe noise image optimization electronic device, comprising:

at least one processor; and

a memory connected in communication with the at least one processor, wherein,

the memory stores a computer program executable by the at least one processor, and the computer program is executed by the at least one processor, to cause the at least one processor to execute the stripe noise image optimization method according to any one of claims 1 to 7.

10. A computer-readable storage medium storing a computer instruction, wherein the computer instruction, when being executed by a processor, causes the processor to implement the stripe noise image optimization method according to any one of claims 1 to 7.

S110

Extract candidate stripe noises in a stripe noise image and determine candidate stripe windows based on adjacent candidate stripe noises

S120

Determine a target stripe window based on candidate center distances between the candidate stripe windows and a region-of-interest window in the stripe noise image

S130

Adjust an acquisition parameter of an image sensor based on a target center distance between the target stripe window and the region-of-interest window, to allow the target center distance between the target stripe window and the region-of-interest window in the stripe noise image acquired according to an adjusted acquisition parameter to meet a preset distance condition

**FIG. 1**

Row average value

0    X1        X2        X3        Row sequential number

**FIG. 2**

FIG. 3

```
                                                               ┌─ S210
┌─────────────────────────────────────────────────────────────┐
│   Acquire images using alternately a first exposure time and a second    │
│ exposure time through an image sensor, where the first exposure time is  │
│   determined according to a power frequency, and the second exposure     │
│       time is determined according to an image shooting scene            │
└─────────────────────────────────────────────────────────────┘
```

```
                                                               ┌─ S220
┌─────────────────────────────────────────────────────────────┐
│   According to a first exposure image, perform brightness alignment on   │
│  an adjacently acquired second exposure image, where the first exposure  │
│ image is an image acquired using the first exposure time, and the second │
│   exposure image is an image acquired using the second exposure time     │
└─────────────────────────────────────────────────────────────┘
```

```
                                                               ┌─ S230
┌─────────────────────────────────────────────────────────────┐
│ Determine positions of candidate stripe noises according to a difference │
│  image between the first exposure image and a second exposure image      │
│  obtained after the brightness alignment, and determine candidate stripe │
│        windows according to adjacent candidate stripe noises             │
└─────────────────────────────────────────────────────────────┘
```

```
                                                               ┌─ S240
┌─────────────────────────────────────────────────────────────┐
│    Determine a candidate stripe window corresponding to a minimum        │
│   candidate center distance among the candidate center distances as a    │
│                        target stripe window                              │
└─────────────────────────────────────────────────────────────┘
```

Determine whether the target center distance is less than or equal to a preset distance threshold — S250

No → Continue to acquire an image using the current acquisition parameter — S290

Yes

```
                                                               ┌─ S260
┌─────────────────────────────────────────────────────────────┐
│  Set the acquisition parameter to a first blanking row number parameter  │
└─────────────────────────────────────────────────────────────┘
```

```
                                                               ┌─ S270
┌─────────────────────────────────────────────────────────────┐
│ If a target center distance between a target stripe window and a region- │
│  of-interest window in a first subsequent image acquired using the first │
│      blanking row number parameter is greater than the preset distance   │
│  threshold, switch the first blanking row number parameter to a second   │
│                     blanking row number parameter                        │
└─────────────────────────────────────────────────────────────┘
```

```
                                                               ┌─ S280
┌─────────────────────────────────────────────────────────────┐
│ If a target center distance between a target stripe window and a region- │
│  of-interest window in a second subsequent image acquired using the      │
│   second blanking row number parameter is greater than the preset        │
│  distance threshold, switch the second blanking row number parameter     │
│             back to the first blanking row number parameter              │
└─────────────────────────────────────────────────────────────┘
```

**FIG. 4**

310 320 330

| Candidate stripe window determination module | Target stripe window determination module | Acquisition parameter adjustment module |

**FIG. 5**

10

11 12 13

| Processor | ROM | RAM |

14

15

| I/O interface |

16 17 18 19

| Input unit | Output unit | Storage unit | Communication unit |

**FIG. 6**

## INTERNATIONAL SEARCH REPORT

| | International application No. |
|---|---|
| | **PCT/CN2023/099585** |

**A.    CLASSIFICATION OF SUBJECT MATTER**

H04N25/677(2023.01)i

According to International Patent Classification (IPC) or to both national classification and IPC

**B.    FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT; ENTXT; ENTXTC; CJFD; CNKI: 图像传感器, 条纹噪声, 候选, 距离, 中心, 窗口, 感兴趣区域, 阈值, 消隐, 行, 垂直, 电源频率, image sensor, fringe noise, candidate, distance, center, window, ROI, threshold, blank, row, vertical, power frequency.

**C.    DOCUMENTS CONSIDERED TO BE RELEVANT**

| Category* | Citation of document, with indication, where appropriate, of the relevant passages | Relevant to claim No. |
|---|---|---|
| A | CN 101662589 A (CANON INC.) 03 March 2010 (2010-03-03)<br>description, page 13, figure 3 | 1-10 |
| A | CN 101102412 A (VTRON CORPORATION) 09 January 2008 (2008-01-09)<br>entire document | 1-10 |
| A | JP 2021082949 A (CANON INC.) 27 May 2021 (2021-05-27)<br>entire document | 1-10 |
| A | WO 2020161867 A1 (MITSUBISHI ELECTRIC CORP.) 13 August 2020 (2020-08-13)<br>entire document | 1-10 |
| A | JP 2014165798 A (SONY CORP.) 08 September 2014 (2014-09-08)<br>entire document | 1-10 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 July 2023** | **03 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/099585**

| Patent document cited in search report | | | Publication date (day/month/year) | Patent family member(s) | | | Publication date (day/month/year) |
|---|---|---|---|---|---|---|---|
| CN | 101662589 | A | 03 March 2010 | JP | 2010056795 | A | 11 March 2010 |
| | | | | JP | 5161706 | B2 | 13 March 2013 |
| | | | | US | 2010053380 | A1 | 04 March 2010 |
| | | | | US | 8174589 | B2 | 08 May 2012 |
| | | | | CN | 101662589 | B | 28 December 2011 |
| CN | 101102412 | A | 09 January 2008 | CN | 100571340 | C | 16 December 2009 |
| JP | 2021082949 | A | 27 May 2021 | None | | | |
| WO | 2020161867 | A1 | 13 August 2020 | EP | 3923563 | A1 | 15 December 2021 |
| | | | | EP | 3923563 | A4 | 23 February 2022 |
| | | | | JPWO | 2020161867 | A1 | 09 September 2021 |
| | | | | JP | 6984766 | B2 | 22 December 2021 |
| | | | | US | 2022094860 | A1 | 24 March 2022 |
| JP | 2014165798 | A | 08 September 2014 | US | 2014240563 | A1 | 28 August 2014 |
| | | | | US | 9538103 | B2 | 03 January 2017 |
| | | | | CN | 104010146 | A | 27 August 2014 |
| | | | | CN | 104010146 | B | 27 March 2018 |

Form PCT/ISA/210 (patent family annex) (July 2022)

**EP 4 629 656 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211524256